# EUROPEAN PATENT APPLICATION

(11) **EP 2 515 162 A1**
(43) Date of publication of application: **24.10.2012**
(21) Application number: 10837348.1
(22) Date of filing: 15.10.2010
(51) Int. Cl.: G02F 1/1337

(54) **LIQUID-CRYSTAL DISPLAY PANEL AND METHOD FOR MANUFACTURING LIQUID-CRYSTAL DISPLAY PANEL**

(30) Priority: 17.12.2009 JP 2009286770
(71) Applicant: Sharp Kabushiki Kaisha, Osaka-shi, Osaka 545-8522 (JP)
(72) Inventor: TAMURA Ryoh, Osaka-shi Osaka 545-8522 (JP); SAWAYAMA Yutaka, Osaka-shi Osaka 545-8522 (JP)
(74) Representative: Müller - Hoffmann & Partner
(86) International application number: PCT/JP2010/068156
(87) International publication number: WO 2011/074318

(57) **Abstract**

The present invention provides a liquid crystal display panel that prevents disturbances of the alignment of liquid crystal molecules by means of a liquid crystal alignment control projection, thereby providing high display quality. The liquid crystal display panel of the present invention comprises a pair of substrates; and a liquid crystal layer inserted between the substrates, wherein one of the substrates comprises a wall-shaped liquid crystal alignment control projection projecting toward the other substrate, the liquid crystal alignment control projection comprises a main projection and a sub-projection that is lower than the main projection, and the sub-projection decreases in height with the increasing distance from the main projection.

## Description

### Technical Field

The present invention relates to a liquid crystal display panel and a method for producing a liquid crystal display panel. More specifically, the present invention relates to a liquid crystal display panel suited for MVA display mode, and a method for producing such a liquid crystal display panel.

### Background Art

A liquid crystal display (LCD) panel is provided with a pair of substrates and a liquid crystal layer inserted between them. In order to produce images, it changes the polarization of light passing through the liquid crystal layer by controlling the alignment of liquid crystal molecules by a voltage applied to the liquid crystal layer via electrodes formed on the substrates.

Specifically, examples of display modes of LCD panels include TN (Twisted Nematic) and VA (Vertical Alignment) modes (see, for example, Patent Literature 1). The TN mode is characterized in that electrodes are formed on both the substrates, the liquid crystal between the substrates is of positive dielectric anisotropy and is twisted 90°, and the liquid crystal is switched by a vertical electric field perpendicular to the substrates. The VA mode is characterized in that the liquid crystal between the substrates is of negative dielectric anisotropy, the liquid crystal molecules are arranged in vertical alignment by means of a vertical alignment film and the like while no electric field is applied, and the liquid crystal molecules are tilted horizontally when a voltage is applied.

A recently proposed technique is MVA (Multi-domain Vertical Alignment) mode, which is an advanced mode of the VA mode. The MVAmode is characterized in that each pixel is divided into a plurality of regions (multi-domains) by alignment control projections. The MVA mode enables liquid crystal molecules in each pixel to be tilted into different directions, and therefore provides uniform halftone display even when viewed from any direction. Thus, this mode provides a high contrast ratio, a wide viewing angle, and a high response speed.

Such alignment control projections can be formed by, for example, a patterning method which includes: applying, to a color filter, a photosensitive resin composition that absorbs a photosensitive wavelength range of light; exposing the photosensitive resin composition to light through a photomask; and developing the exposed photosensitive resin composition (see, for example, Patent Literatures 2 and 3).

### Citation Literature

### Patent Literature

Patent Literature 1: JP 2002-148624 A
Patent Literature 2: JP 2004-61539 A
Patent Literature 3: JP 2006-201234 A

### Summary of Invention

### Technical Problem

The present inventors have studied MVA mode liquid crystal display panels to develop a mode in which, in each pixel, a plurality of higher liquid crystal alignment control projections are provided in regions corresponding to openings and lower liquid crystal alignment control projections are also provided as supplementary structures in regions other than the regions corresponding to openings (e.g. light blocking regions). In the case that in addition to liquid crystal alignment control projections for dividing each pixel, lower liquid crystal alignment control projections are formed as supplementary structures, liquid crystal molecules in each pixel can be more precisely divided into groups according to some regions. This structure enables the tilt direction of liquid crystal molecules to be controlled more precisely, and therefore provides remarkably improved display quality.

However, the intensive studies by the present inventors have revealed that higher liquid crystal alignment control projections have higher force to control the alignment of liquid crystal molecules than lower liquid crystal alignment control projections and their high alignment control force affects strongly the effect of the alignment control force of the lower liquid crystal alignment control projections. This may cause a disturbance of the alignment of liquid crystal molecules in regions near the boundaries between the higher liquid crystal alignment control projections and the lower liquid crystal alignment control projections.

Further, the present inventors found that if there is a level difference between regions on which liquid crystal alignment control projections are formed, this level difference intensifies such a disturbance of liquid crystal molecules, possibly resulting in poor display quality. The present inventors also found that, for example, in the case that liquid crystal alignment control projections are provided in both an opening and a region other than the opening in a pixel, a level difference between the opening and the other region, in particular, tends to cause a disturbance of the alignment of liquid crystal molecules.

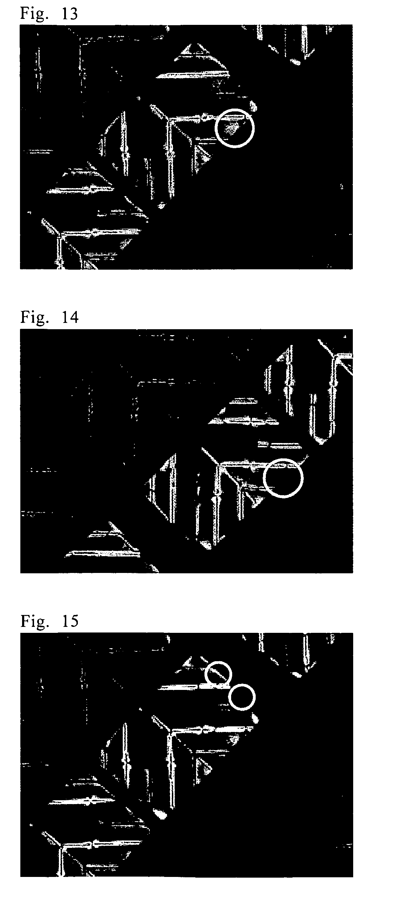

Fig. 15 is an optical microscope photograph taken at an extinction position which two-dimensionally shows a substrate surface of an MVA mode liquid crystal display panel examined by the present inventors. As seen in the areas enclosed by the circles in Fig. 15, no bright line is observed in the area where no liquid crystal alignment control projection is formed, but a bright line is observed in the area where liquid crystal alignment control projections are formed. This indicates a disturbance of the alignment of liquid crystal molecules in a part of the area adjacent to liquid crystal alignment control projections. Since the photograph of Fig. 15 was taken at an extinction position, the bright line is observed as a dark line in a normal display state.

The present invention has been made in view of these problems and an object of the present invention is to provide a liquid crystal display panel that prevents disturbances of the alignment of liquid crystal molecules by means of liquid crystal alignment control projections, and therefore provides high display quality.

### Solution to Problem

The present inventors have studied various modes that can prevent disturbances of liquid crystal molecules without losing the advantage of the coexistence of higher and lower liquid crystal alignment control projections, and focused on the shape of lower liquid crystal alignment control projections. The present inventors have found that if a lower liquid crystal alignment control projection gradually decreases in height with the increasing distance from a higher liquid crystal alignment control projection, this height change assists in aligning liquid crystal molecules and tilts the liquid crystal molecules in such a manner that the tilt angle of liquid crystal molecules adjacent to one another continuously and smoothly changes. Namely, this height change enables the liquid crystal molecules to be successfully arranged without causing a great disturbance of the alignment of the liquid crystal molecules. Thus, the present inventors have found a way to solve the above problem, thereby completing the present invention.

Specifically, the present invention provides a liquid crystal display panel comprising:
a pair of substrates; and
a liquid crystal layer inserted between the substrates,
wherein one of the substrates comprises wall-shaped liquid crystal alignment control projections projecting toward the other substrate,
the liquid crystal alignment control projections include a main projection and a sub-projection that is lower than the main projection, and
the sub-projection gradually decreases in height with the increasing distance from the main projection.
The following description is offered to illustrate the liquid crystal display panel of the present invention in detail.

The liquid crystal display panel of the present invention comprises a pair of substrates and a liquid crystal layer inserted between the substrates. For example, one of the substrates serves as an array substrate, and the other serves as a color filter substrate. The array substrate is provided with a plurality of pixel electrodes. In this case, the alignment of the liquid crystal can be controlled by each pixel electrode (for each sub-pixel). The color filter substrate is provided with, for example, color filters such as R (red), G (green), and B (blue) filters at positions facing the pixel electrodes in the array substrate. In this case, the display color can be controlled for each pixel.

One of the substrates is provided with wall-shaped liquid crystal alignment control projections projecting toward the other substrate. The liquid crystal alignment control projections are wall-shaped partition structures and divide liquid crystal molecules near the substrate surface into a plurality of groups according to the separated regions. The liquid crystal alignment control projections are made of, for example, a dielectric (insulating) material, and tilt the liquid crystal molecules toward the liquid crystal alignment control projections while no voltage is applied to the liquid crystal layer.

The liquid crystal alignment control projections include a main projection and a sub-projection that is lower than the main projection. Among the liquid crystal alignment control projections, the main projection mainly contributes to control of the alignment of the liquid crystal, and the sub-projection is a supplementary structure. These projections more precisely divide the liquid crystal molecules into groups according to some regions, thereby enabling the alignment of the liquid crystal molecules to be controlled more precisely, and providing improved display quality.

The sub-projection gradually decreases in height with the increasing distance from the main projection. Since the alignment control force of the liquid crystal alignment control projections depends on their height, the above-mentioned gradual height change of the sub-projection causes a continuous change of the alignment of liquid crystal molecules adjacent to the sub-projection. Therefore, this structure can prevent disturbances of the alignment of the liquid crystal molecules and deterioration of the display quality. The wording "gradually decreases in height" herein is intended to mean all the following cases: (1) the sub-projection has a flat slope, (2) the sub-proj ection has some steps so that the height decreases stepwise, and (3) the height gradually changes in a curved fashion.

The structure of the liquid crystal display panel of the present invention is not particularly limited by other components, provided that it essentially includes the above-mentioned components. The following description is offered to illustrate preferable modes of the liquid crystal display panel of the present invention in detail.

Preferably, the sub-projection is narrower than the main projection in width. If the sub-projection is narrower than the main projection in width, the aperture ratio is increased. A narrower sub-projection has lower alignment control force, but substantially does not have a negative impact on the display quality because it is just a supplementary projection.

Preferably, the substrate comprising the liquid crystal alignment control projections further comprises a colored layer and a light blocking layer that is higher than the colored layer, and the sub-projection includes a first sub-projection on the colored layer and a second sub-projection on the light blocking layer. If the light-blocking layer is provided in the space between colored layers for color display, it prevents light from leaking from the space between the colored layers. In the case that the colored layer is formed in the regions partitioned by the light-blocking layer, accurate patterning for the colored layer is ensured by forming a level difference between the light-blocking layer and the colored layer, that is, designing the light-blocking layer to be higher than the colored layer. The present invention can prevent disturbances of the alignment of liquid crystal molecules even if there is a level difference between the first sub-projection on the colored layer and the second sub-projection on the light-blocking layer. Therefore, the present invention is particularly suited for this case.

Preferably, the second sub-projection is lower than the first sub-projection. If the light-blocking layer under the second sub-projection is designed to be thicker than the colored layer under the first sub-projection, a difference in level between the light-blocking layer and the colored layer is inevitable. However, if the sub-projection on the colored layer and the sub-projection on the light-blocking layer are designed to have different heights such that these projections have the same height from the substrate surface, the influence of the difference in level between the colored layer and the light-blocking layer can be reduced by this height difference, thereby further successfully preventing disturbances of the alignment of the liquid crystal molecules.

The present invention also provides a method for producing a liquid crystal display panel that comprises liquid crystal alignment control projections including a main projection and a sub-projection that is lower than the main projection.
Specifically, the production method comprises:
patterning to form the liquid crystal alignment control projections by exposure to light through a mask comprising a light blocking part, a transmittance controlling part, and a transmitting part;
wherein the exposure is performed after setting the transmittance controlling part above a region where the sub-projection is to be formed,
the transmittance controlling part is provided with V-shaped slits which extend through the mask and are arranged in a transverse direction, and
symmetry axes of the slits decrease in length with the increasing distance from a region for forming the main projection.

The method for producing a liquid crystal display panel of the present invention is suited for the production of the above-described liquid crystal display panel of the present invention. The following description is offered to illustrate the method for producing a liquid crystal display panel of the present invention in detail.

A liquid crystal display panel produced by the production method of the present invention comprises liquid crystal alignment control projections that include a main projection and a sub-projection that is lower than the main projection. As described above, an MVA mode liquid crystal display panel having good ability to control the alignment of liquid crystal molecules can be obtained by forming liquid crystal alignment control projections including different projections: a main projection; and a sub-projection.

The production method comprises patterning to form the liquid crystal alignment control projections by exposure to light through a mask comprising a light-blocking part, a transmittance controlling part, and a transmitting part. These three light transmittance controlling parts enable liquid crystal alignment control projections of different shapes to be formed in different regions by a single exposure process.

The exposure is performed after setting the transmittance controlling part above a region where the sub-projection is to be formed. The transmittance controlling part is provided with V-shaped slits which extend through the mask and are arranged in a transverse direction. This transmittance controlling part enables control of the exposure of the region where the sub-projection is to be formed, and therefore enables the sub-projection that is lower than the main projection to be formed simultaneously with the main projection. Further, because of their V-shape design, the slits enable wall-shaped projections to be formed so that their tips are arranged along the symmetry line of the V-shapes. Therefore, the resulting projections can control the alignment of the liquid crystal molecules symmetrically with respect to the symmetry line.

Symmetry axes of the slits decrease in length with the increasing distance from a region for forming the main projection. The length of "symmetry axes of the slits" means the length of a bisector symmetrically dividing each slit. If the symmetric lines of the respective slits gradually vary in length, a sub-projection that gradually varies in height can be easily formed. The sub-projection thus formed can prevent disturbances of the alignment of the adjacent liquid crystal molecules. Although V-shaped marks remain on the surface of the sub-proj ection formed by the production method of the present invention, these marks do not have a significant impact on the alignment control force.

The method for producing a liquid crystal display panel of the present invention is not particularly limited by other features, provided that it essentially comprises the above-mentioned production processes. The following description is offered to illustrate preferable modes of the method for producing a liquid crystal display panel of the present invention in detail.

Preferably, the exposure is performed after setting the light blocking part above the colored layer, and setting the transmittance controlling part above the colored layer and the light blocking layer. In the case that the colored layer is patterned in the regions partitioned by the light-blocking layer, accurate patterning for the colored layer in regions surrounded by the light-blocking layer is ensured by forming a level difference between the light-blocking layer and the colored layer, that is, designing the light-blocking layer to be higher than the colored layer. The sub-projection produced by the production method of the present invention can prevent disturbances of the alignment of liquid crystal molecules even if there is a difference in level between the main projection on the colored layer and the sub-proj ection on the light-blocking layer. Therefore, the present invention is particularly suited for this case.

Preferably, the transmittance controlling part comprises a first transmittance controlling part anda second transmittance controlling part, the first transmittance controlling part is provided with slits such that the total area of the slits is smaller, and the second transmittance controlling part is provided with slits such that the total area of the slits is larger. Also preferably, the exposure is performed after setting the first transmittance controlling part above the colored layer, and setting the second transmittance controlling part above the light blocking layer. If there is a difference in level between the light-blocking layer and the colored layer, this difference may result in a difference in level between sub-projections on these layers. The production method of the present invention, however, can adjust the sub-projection on the colored layer and the sub-projection on the light-blocking layer to the same level from the substrate surface because the sub-projection formed under the first transmittance controlling part is lower than the sub-projection formed under the second transmittance controlling part. Therefore, this combination of sub-projections can prevent disturbances of the alignment of the liquid crystal molecules.

### Advantageous Effects of the Invention

The liquid crystal display panel of the present invention prevents disturbances of the alignment of liquid crystal molecules by means of liquid crystal alignment control projections, and therefore provides high display quality. In addition, the method for producing a liquid crystal display panel of the present invention provides a liquid crystal display panel that prevents disturbances of the alignment of liquid crystal molecules by means of liquid crystal alignment control projections, and therefore provides high display quality.

### Brief Description of Drawings

Fig. 1 is an enlarged plan view schematically illustrating a substrate surface of one of the substrate of a liquid crystal display panel of embodiment 1;
Fig. 2 is a perspective view schematically illustrating liquid crystal alignment control projections of the liquid crystal display panel of embodiment 1;
Fig. 3 is a perspective photograph taken by an atomic force microscope (AFM) which shows the liquid crystal alignment control projections of the liquid crystal display panel of embodiment 1;
Fig. 4 is a plan view schematically illustrating a mask used for patterning to form ribs in the course of the production of the liquid crystal display panel of embodiment 1;
Fig. 5 is a schematic enlarged view of a transmission controlling part of the mask;
Fig. 6 is another schematic enlarged view of a transmission controlling part of the mask;
Fig. 7 is a graph showing the transmittance of regions of the transmission controlling part of the mask;
Fig. 8 is a graph showing the height of a sub-rib corresponding to the regions of the transmission controlling part of the mask;
Fig. 9 is plan view schematically illustrating one of ribs of embodiment 1;
Fig. 10 is a schematic cross-sectional view of a main rib and a sub-rib of embodiment 1;
Fig. 11 is a more realistic cross-sectional view schematically illustrating the main rib and the sub-rib of embodiment 1;
Fig. 12 is schematic plan view of a sub-rib of embodiment 1, and shows the tilt directions of liquid crystal molecules;
Fig. 13 is an optical microscope photograph taken at an extinction position which shows a substrate surface of a liquid crystal display panel that is provided with sub-ribs having a constant height (comparative embodiment 1);
Fig. 14 is an optical microscope photograph taken at an extinction position which shows the substrate surface of the liquid crystal display panel that is provided with sub-ribs that vary in height (embodiment 1); and
Fig. 15 is an optical microscope photograph taken at an extinction position which two-dimensionally shows a substrate surface of an MVA mode liquid crystal display panel examined by the present inventors.

### Description of Embodiments

The following description is offered to illustrate the present invention with reference to the drawings by way of embodiments, but the present invention is not limited to these embodiments.

### Embodiment 1

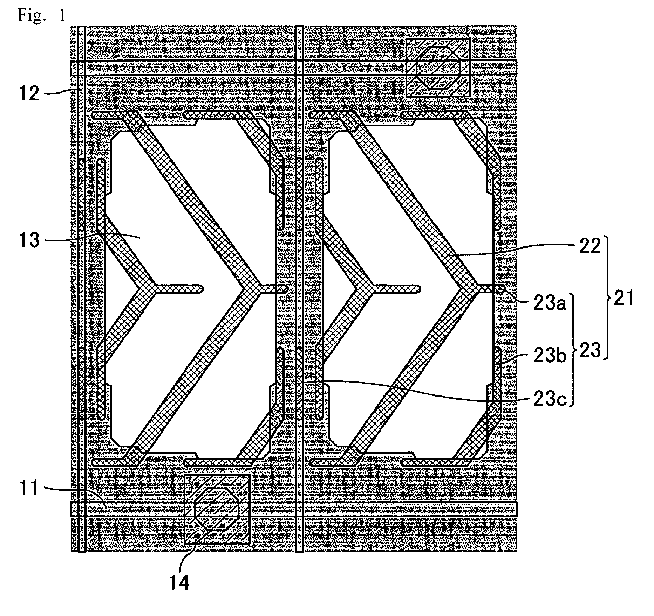

A liquid crystal display panel of embodiment 1 comprises a pair of substrates and a liquid crystal layer inserted between the substrates. Fig. 1 is an enlarged plan view schematically illustrating a substrate surface of one of the substrate of a liquid crystal display panel of embodiment 1. As shown in Fig. 1, one of the substrate (hereinafter, also referred to as array substrate) of the liquid crystal display panel of embodiment 1 is provided with scan lines 11 running along the row direction and signal lines 12 running along the column direction. The regions surrounded by these lines are sub-pixels.

The array substrate is provided with a plurality of pixel electrodes 13, and the pixel electrodes 13 are provided at each position in one-to-one correspondence with the sub-pixels. Namely, the pixel electrodes 13 are arranged in the row and column directions to form a matrix. The pixel electrodes 13 are driven independently by various lines running between the pixel electrodes 13, such as the scan lines 11 and signal lines 12, and switching elements such as thin film transistors (TFTs) disposed next to the intersections of these lines. The shape of each pixel electrode 13 may be a rectangular shape or a rectangular shape with a notch or projection when viewed in a plan view, and may not be the same as the shape of openings of a black matrix (described later).

Color filters are respectively provided at each position corresponding to the sub-pixels in the other substrate (hereinafter, also referred to as counter substrate). The color filters may be provided in the array substrate, not in the counter substrate.

A plurality of color filters are required to produce desired colors for each pixel. Therefore, each pixel includes a plurality of sub-pixels corresponding to the color filters. The combination of color filters for each pixel may be, for example, three primary colors: red (R) ; green (G) ; and blue (B), or other colors (e.g. yellow (Y) and white (W)) may further be included.

The counter substrate is provided with a light-blocking structure (hereinafter, also referred to as black matrix (BM)) in the space between the color filters. The BM prevents light from leaking from the space between the color filters and also prevents color mixture. In embodiment 1, the regions without the BM correspond to openings.

Columnar spacers 14 are provided at arbitrary positions in the regions covered with the BM. The columnar spacers 14 are arranged to support the substrates of the liquid crystal display panel with a predetermined distance between them.

A common electrode is formed to entirely cover the color filters and the BM. The common electrode and the pixel electrodes 13 of the array substrate together form an electric field in the liquid crystal layer.

In the MVA mode liquid crystal display panel of embodiment 1, liquid crystal alignment control projections (hereinafter, also referred to as ribs) 21 are provided on the common electrode of the counter substrate. The ribs 21 are linear when viewed in a plan view of the panel face (substrate face). The ribs 21 each have an angled shape, and therefore form a zigzag shape together in a wide view of the display regardless the boundaries between the pixels. The extending direction of the ribs 21 forms a certain angle (e.g. 30° to 60°) with the short and long sides of the pixel electrodes 13, and even a single rib 21 divides a sub-pixel into a plurality of regions.

The ribs 21 are made of a dielectric (insulating) material such as a novolac resin, and tilt the adjacent liquid crystal molecules toward the ribs 21 even when no voltage is applied. Thus, the liquid crystal molecules are tilted in a different direction in each region divided by the ribs 21, thereby providing a wide viewing angle.

As shown in Fig. 1, the ribs 21 include V-shaped or linear main ribs (main projection) 22 and sub-ribs (sub-projections) 23 that extend in a direction at a certain angle relative to the extending direction of the main ribs 22. If the main ribs 22 are V-shaped, they can equally divide the respective sub-pixels into regions, thereby providing a wide viewing angle. If the sub-ribs 23, as supplementary structures, extend from parts of the main ribs 22 having such a shape, the alignment of the liquid crystal molecules is more precisely controlled, resulting in more improved display quality.

Examples of the sub-ribs 23 include first sub-ribs (first sub-projections) 23a that extend from the angled part (corner) of each main rib 22, and second sub-ribs (second sub-projections) 23b that extend from the ends of each main rib 22. Alternatively, the sub-ribs 23 may be independent of the main ribs 22, and specifically, may be third sub-ribs 23c that are formed on the boundaries between the sub-pixels. These sub-ribs 23 have a height lower than the main ribs 22 and have the same width as or a width narrower than the main ribs 22 because they need not have the same level of the alignment control force as the main ribs 22. The extending direction of the main ribs 22 forms a certain angle with the contours of the sub-pixels, whereas the sub-ribs 23 extend in the row or column direction.

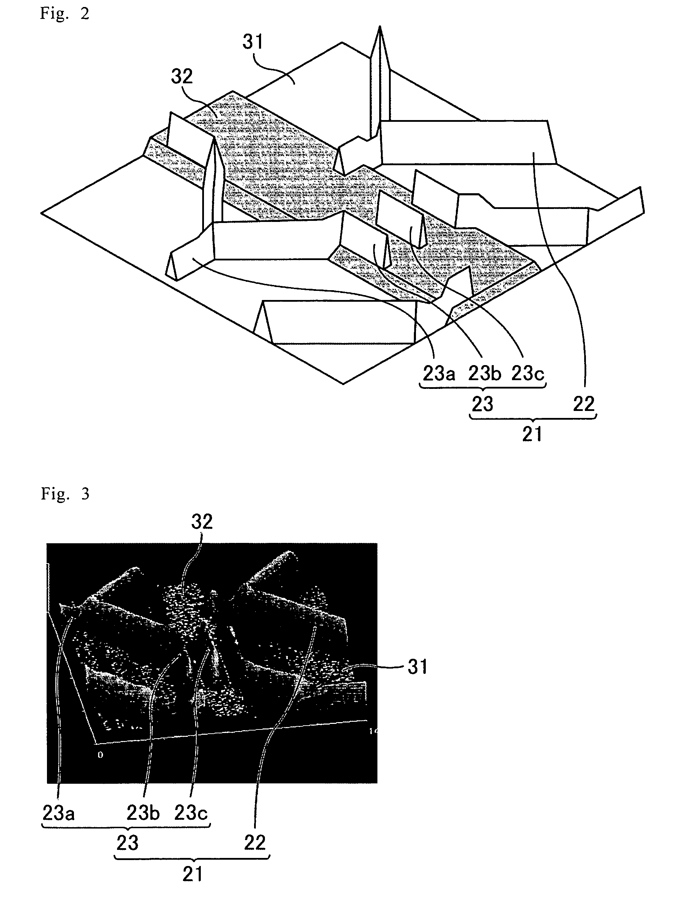

Fig. 2 is a perspective view schematically illustrating liquid crystal alignment control projections of the liquid crystal display panel of embodiment 1, and Fig. 3 is a perspective photograph taken by an atomic force microscope (AFM) which shows the liquid crystal alignment control projections of the liquid crystal display panel of embodiment 1. As shown in Figs. 2 and 3, the ribs 21 are partition structures projecting toward the substrate that is defined as the other substrate when the counter substrate is defined as one substrate, that is, toward the array substrate. Among the ribs 21, the main ribs 22 and the first sub-ribs 23a are formed on the color filters 31 (in the openings) and the second sub-ribs 23b and the third sub-rib s23c are formed on the BM 32 (in regions other than the openings).

There is a difference in level between the color filters (colored layer) 31 and the BM (light-blocking layer) 32. Specifically, the BM 32 is designed to be higher than the color filters 31. Therefore, even in a single rib unit, there is a difference in level between the rib 23a on the color filter 31 and the ribs 23b on the BM 32. This level difference is inevitably formed in the course of the production of the color filters 31 and the BM 32.

Specifically, the color filters 31 can be easily formed with high accuracy by, for example, applying droplets of materials for the color filters by ink-jetting to the space partitioned by the BM 32. In order to position the materials for the color filters more accurately in the target spaces, the surfaces on which the color filters are to be formed should be subjected to a lyophilic treatment, and the surface of the BM 32 should be subjected to a lyophobic treatment. The color filters 31 and BM 32 formed through these treatments are different from each other in height.

The level difference between the BM 32 and the color filters 31 causes a level difference between the ribs respectively formed on them. In the case that the color filters 31 and the BM 32 are formed by a common production process, the level difference between them is 0.4 to 0.6 µm, and is almost the same as the height of normal sub-ribs (15% to 90% of the main ribs).

As a way to cancel the level difference, it may be acceptable to further reduce the height of the sub-ribs 23 on the BM 32. However, this is not preferable because conventional methods require a further narrower design of the sub-ribs 23, and therefore process margin for sub-ribs is remarkably reduced disadvantageously. In order to avoid this disadvantage, the following process is performed in the production process of the sub-ribs 23 in embodiment 1.

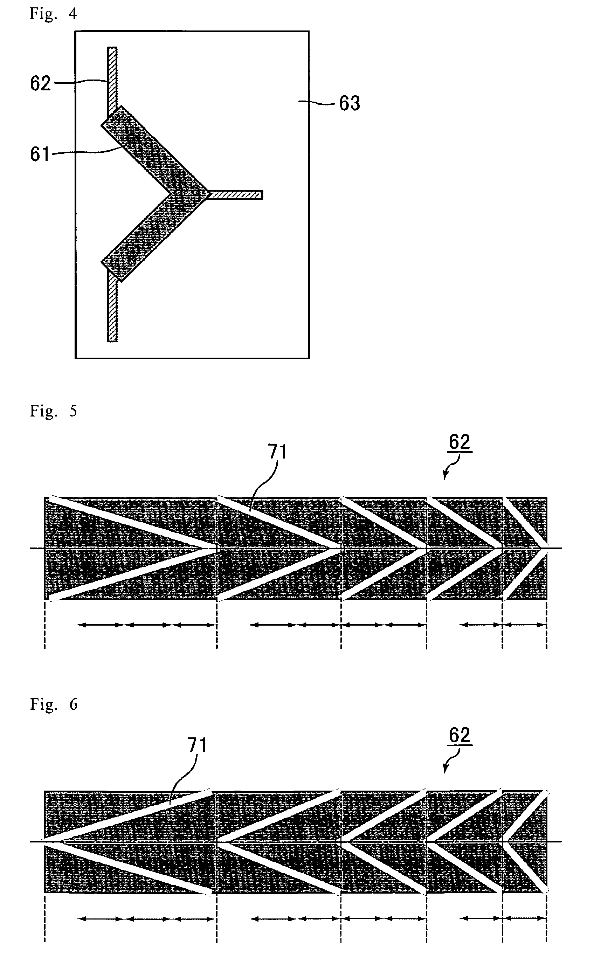

In embodiment 1, photolithography using a mask is employed for patterning to form the ribs. Fig. 4 is a plan view schematically illustrating the mask used for patterning of the ribs in the course of the production of the liquid crystal display panel of embodiment 1. As shown in Fig. 4, the mask used in embodiment 1 is provided with a light-blocking part 61, transmission controlling parts 62, and a transmitting part 63. The light-blocking part 61 is V-shaped, and the transmission controlling parts 62 are linear. The light-blocking part 61 is connected to the transmission controlling parts 62, and the light-blocking part 61 extends at an angle relative to the extending direction of the transmission controlling parts 62. Namely, the light-blocking part 61 and the transmission controlling parts 62 as a whole have a V-shape with angled parts. The mask is arranged at such a position that a region to be a main rib after patterning is covered with the light-blocking part 61, and regions to be sub-ribs after the patterning are covered with the transmission controlling parts 62, and a region where no rib is formed by the patterning is covered with the transmitting part 63. Then, an exposing process is performed.

Figs. 5 and 6 are enlarged views of a transmission controlling part of the mask. As shown in Figs. 5 and 6, the transmission controlling parts 62 of the mask are provided with a plurality of V-shaped slits 71 that extend through the mask and are arranged in the transverse direction. In the exposure process, light is allowed to pass through these slits 71. The expose can be controlled by changing the size of the slits 71. In Figs. 5 and 6, the left side of the transmission controlling part 62 is on the light-blocking part side and the right side thereof is the other end.

The symmetry axes of the respective V-shaped slits 71 are all different in length. Specifically, the length decreases with the increasing distance from the region for forming a main rib. Hereinafter, the length of the symmetry axis of each slit is also referred to "pattern width". Namely, a plurality of V-shaped slits 71 having different pattern widths are formed in the transverse direction on the surface of the mask in embodiment 1, and are arranged such that a slit with a longer pattern width is located closer to the region for forming a main rib compared to the pattern width at the end as a unit.

Adjacent V-shaped slits open to the same direction, that is, adjacent V-shaped slits are in the "<" shape (open to the right), or in the ">" shape (open to the left). The opening direction of the slits 71 in embodiment 1 is not particularly limited, and the slits 71 may open to the region for forming a main rib, as shown in Fig. 5, or may be closed on the side of the region for forming a main rib, as shown in Fig. 6.

The respective slits 71 may be different in the center angle of the V-shape in embodiment 1. In this case, the V-shaped slits 71 are arranged such that the center angle increases with the increasing distance from the region for forming a main rib.

Such arrangement of the slits 71 reduces the exposure through the entire transmission controlling part compared to the transmitting part, and enables the exposure to be controlled in the respective regions with different pattern widths of the slits 71.

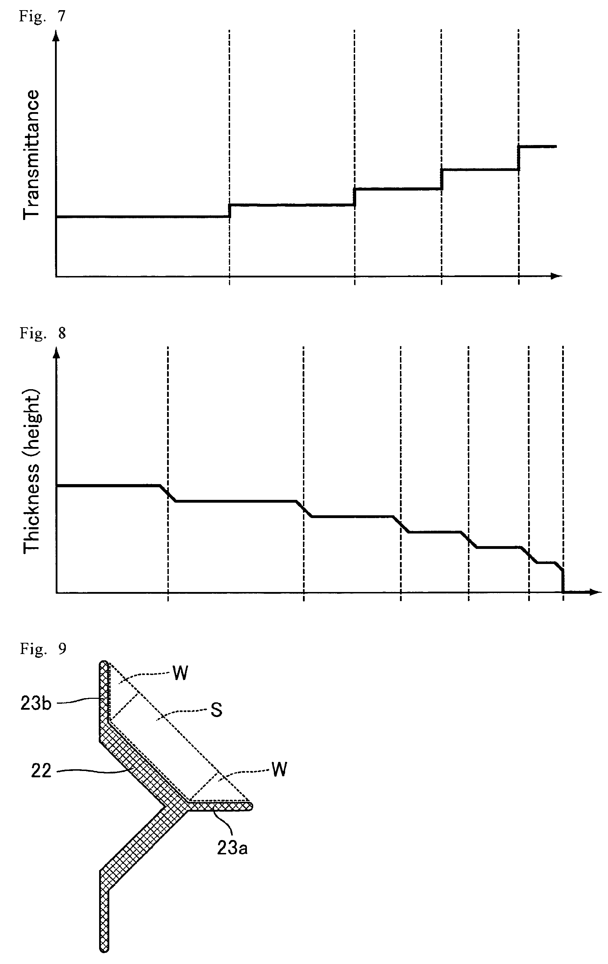

Fig. 7 is a graph showing the transmittance of regions of the transmission controlling part of the mask. Fig. 8 is a graph showing the height of a sub-rib corresponding to the regions of the transmission controlling part of the mask. As shown in Fig. 7, the transmittance of light through a pattern width of the mask becomes higher in a region with the decreasing the pattern width. In other words, the exposure of the respective regions is controlled to decrease stepwise from the region for forming a main rib. Therefore, as shown in Fig. 8, the thickness of a rib formed as a result of the exposure process varies stepwise. Thus, the sub-rib which stepwise decreases in height with the increasing distance from the main rib is formed. Such sub-ribs can control the liquid crystal molecules such that the tilt angle of liquid crystal molecules continuously and smoothly changes. Therefore, these sub-ribs can prevent disturbances of the alignment of the liquid crystal molecules near the angled part or the ends of the main rib, and disturbances of the alignment of the liquid crystal molecules even in the case that there is a level difference between the main rib and the sub-ribs or between the sub-ribs.

These V-shaped slits 71 are symmetrical with respect to the center line of the transmission controlling part (the alternate long and short dash line in Figs. 5 and 6). Therefore, a projecting rib can be formed so that its tips are arranged along the center line of the transmission controlling part, and therefore the alignment of the liquid crystal molecules can be symmetrically controlled with respect to the ribs.

The width of the slits is smaller than the resolution limit of exposure devices, and is specifically 0.1 µm to 5 µm, and preferably 0.5 to 2 µm. These ranges are determined based on the following resolution limits: 0.1 µm to several micrometers of imaging optical exposure devices (e.g. steppers, mirror projection systems); and several micrometers of proximity exposure devices, in particular, about 3 to 4 µm of exposure devices for large scale televisions (based on manufacturer's specifications). Since unlike common gray tone masks (halftone masks) for semiconductors and the like, the mask used in embodiment 1 does not require interference wave cancellation, the slits need not be adjusted to a width of the n fold of the wavelength of emitted light.

Specifically, patterning to form the ribs can be performed by photolithography as described below.

First, a positive photosensitive resin material such as a novolac resin is applied to the surface of the counter substrate by spin coating or the like and formed into a photosensitive resin coat through a desolvating treatment. Next, the mask of Fig. 5 or 6 is arranged at a predetermined position, and the surface of the counter substrate is exposed to light through the mask. The condition of the exposure process is, for example, 250 mJ/cm². The photosensitive resin coat after the exposure process was developed for 1 minute with potassium hydroxide and baked at 200°C for 20 minutes. As a result, portions which have been protected from light by the light-blocking part in the exposure process are left.

More specifically, in the exposure process, the mask is set such that among the respective parts of the mask, the light-blocking part is located above the region where the main rib is to be formed, and the transmittance controlling parts are located above the regions where the sub-ribs are to be formed. As a result, the region where the main rib is to be formed and the regions where the regions where the sub-ribs are to be formed can all be exposed to light in the single exposure process. In this manner, all the ribs including the main rib and the sub-ribs can be formed by patterning.

In addition, if the transmittance controlling parts include a first transmittance controlling part that is provided with slits such that the total area of the slits is smaller and second transmittance controlling part (s) that is/are provided with slits such that the total area of the slits is larger, ribs having different heights are formed in the regions which have been exposed to light through these transmittance controlling parts. Specifically, the first transmittance controlling part is set above a region where a first sub-rib is to be formed, and the second transmittance controlling parts are set above regions where second and third sub-ribs are to be formed. Then, the exposure process is performed so that sub-ribs having different heights are formed at once. In order to form a difference in area between them, for example, the number of slits may be increased, or the area of each slit may be increased.

The production method described above further reduces the difference in the level from the substrate surface between the first sub-rib patterned on the color filter and the second and third sub-ribs patterned on the BM, thereby providing a liquid crystal display panel that can further prevent disturbances of the liquid crystal alignment.

The following description is offered to illustrate the shape of the ribs formed by the production method of embodiment 1 in detail.

Fig. 9 is plan view schematically illustrating one of ribs of embodiment 1. As shown in Fig. 9, the rib includes a higher and wider main rib 22 and lower and narrower sub-ribs 23a and 23b. The main rib 22 is V-shaped, and the sub-ribs 23a and 23b are linear. The sub-ribs 23a and 23b extend from the angled part and the ends of the main rib 22, respectively. The liquid crystal molecules tilt with one end directed toward theses ribs. Therefore, without the sub-ribs 23a and 23b at the ends of the main rib 22, a disturbance of the alignment of liquid crystal molecules arises in areas near the ends of the main rib 22. Likewise, a disturbance of the alignment of liquid crystal molecules arises in an area near the angled part of the main rib 22.

In embodiment 1, the first sub-rib 23a extends from the angled part of the main rib 22, and the second sub-ribs 23b extend from both ends of the main rib 22. The sub-ribs 23a and 23b function as barriers for preventing disturbances of the liquid crystal molecules, and therefore more surely divide the liquid crystal molecules into groups and divide each sub-pixel into domains in a determined manner.

In the case that such sub-ribs 23a and 23b are formed, the rib 21 divides the sub-pixel into the following regions (domains) of different alignments: a main control region S where the alignment is mainly controlled by the main rib 22; and sub-control regions W where the alignment is additionally controlled by the sub-rib 23a or 23b, as indicated by dot lines in Fig. 9.

However, since the main rib 22 has higher alignment control force in comparison to the sub-ribs 23a and 23b, the main rib 22 not only control the alignment of the liquid crystal molecules in a determined pattern, but may forcibly affect the liquid crystal molecules in the sub-control regions W, thereby causing a disturbance of the alignment. As described above, such a disturbance may be further enhanced by the level difference between the color filters and the BM.

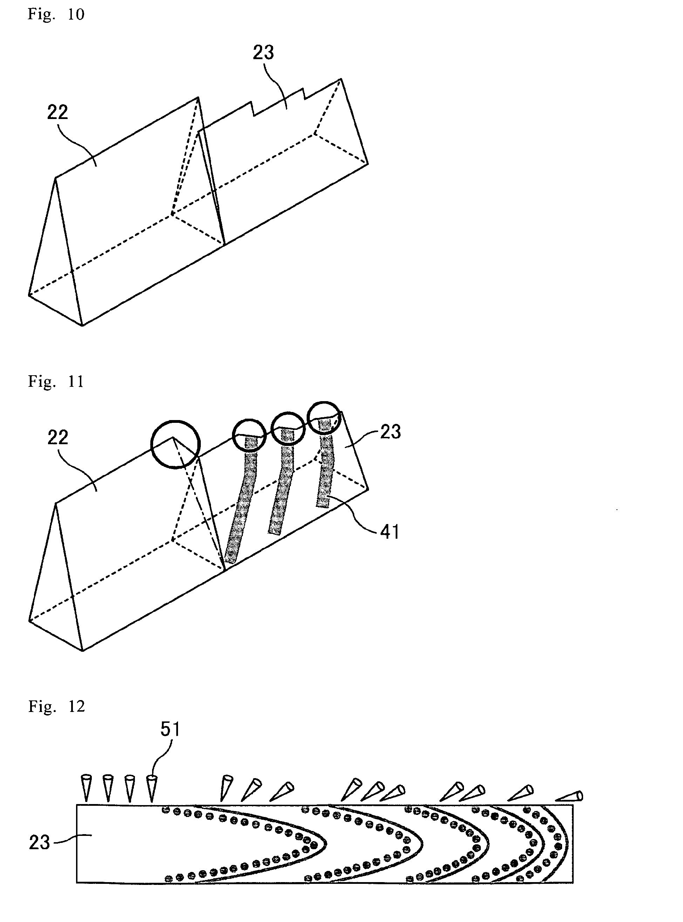

In contrast, ribs formed by the production method of embodiment 1 have a structure that can avoid such a disturbance of the alignment of the liquid crystal molecules. Fig. 10 is a schematic cross-sectional view of a main rib and a sub-rib of embodiment 1.

As shown in Fig. 10, the rib 21 includes the main rib 22 and the sub-rib 23 which extends from a part of the main rib 22 in embodiment 1. The sub-rib 23 decreases in height with the increasing distance from the main rib 22. Such a change in height is formed by the difference in exposure in the production method described above. Specifically, the height changes stepwise in regions corresponding to the respective slits, as shown in Fig. 8. This structure enables the alignment of the liquid crystal molecules adjacent to the sub-ribs to be changed continuously and smoothly.

Fig. 11 is a more realistic cross-sectional view schematically illustrating the main rib and the sub-rib of embodiment 1. Actually, during the baking process, the boundary between the main rib 22 and the sub-rib 23 and the regions of the sub-rib 23 corresponding to the boundaries of the slits, enclosed by the circles, are flattened (smoothed) as a result of heat sag. Therefore, as shown in Fig. 11, the rib includes smooth slopes unlike those shown in Fig. 10. This structure enables the liquid crystal molecules to be more smoothly aligned compared to one that has some steps. The structure shown in Fig. 11 is also characterized in that the end of the main rib 22 on the sub-rib 23 side is chipped off.

Another notable character of the sub-ribs formed by the production method of embodiment 1 is that V-shaped marks remain on the surface of the sub-ribs in accordance with the shape of the slits of the mask, as indicated by the grey areas in Fig. 11. These marks have no significant impact on the alignment of the liquid crystal molecules, and therefore do not contribute to deterioration of the display quality, but are characteristic of the sub-ribs formed by the production method of embodiment 1.

In embodiment 1, the surface of the sub-ribs may be any of the following structures, provided that the sub-ribs gradually decrease in height: (1) the sub-ribs have flat slopes; (2) the sub-ribs have some steps so that the height thereof changes stepwise; and (3) the height smoothly changes in a curved fashion. One example is that when three points are arbitrarily determined at the edge portion of a sub-rib, the level of these three points becomes lower with the increasing distance from the main rib.

Fig. 12 is schematic plan view of a sub-rib of embodiment 1, and shows the tilt directions of liquid crystal molecules. The curved lines in Fig. 12 indicate areas flattened due to heat sag, and the dots indicate areas with marks of the slit pattern of the mask. As shown in Fig. 12, the liquid crystal molecules adjacent to the sub-ribs gradually tilt more with the increasing distance from the main rib and toward the end of the sub-rib, and the tilt angle of the liquid crystal molecules continuously and smoothly changes. Therefore, the liquid crystal display panel can avoid disturbances of the alignment of the liquid crystal molecules, and therefore prevents deterioration of display quality caused by a disturbance of the alignment of the liquid crystal molecules.

Even if there is such a level difference between the color filter and the BM as described above, ribs having such a shape can prevent disturbances of the alignment of the liquid crystal molecules caused by the level difference. Thus, the structure and the production method of embodiment 1 are particularly suitable for such a case where a level difference may be formed between the color filter and the BM.

Fig. 13 is an optical microscope photograph taken at an extinction position which shows a substrate surface of a liquid crystal display panel that is provided with sub-ribs having a constant height (comparative embodiment 1), and Fig. 14 is an optical microscope photograph taken at an extinction position which shows the substrate surface of the liquid crystal display panel that is provided with sub-ribs that vary in height (embodiment 1).

A comparison between the white circle areas of Figs. 13 and 14 shows that the area has changed to white in Fig. 13 but the area remains black in Fig. 14. Therefore, the structure of embodiment 1, unlike that of comparative embodiment 1, prevents whiteness, in other words, prevents dark areas, which corresponds to the whiteness, in a displaying state, thereby providing good display quality.

The present application claims priority to Patent Application No. 2009-286770 filed in Japan on December 17, 2009 under the Paris Convention and provisions of national law in a designated State, the entire contents of which are hereby incorporated by reference.

### Reference Signs List

11: Scan line
12: Signal line
13: Pixel electrode
14: Columnar spacer
21: Rib (liquid crystal alignment control projection)
22: Main rib (main projection)
23: Sub-rib (sub-projection)
23a: First sub-rib
23b: Second sub-rib
23c: Third sub-rib
31: Color filter
32: Black matrix (BM)
41: Mark of slit
51: Liquid crystal molecule
61: Light-blocking part of mask
62: Transmission controlling part of mask
63: Transmitting part of mask
71: Slit
S: Main control region
W: Sub-control region

## Claims

1. A liquid crystal display panel comprising:
a pair of substrates; and
a liquid crystal layer inserted between the substrates,
wherein one of the substrates comprises wall-shaped liquid crystal alignment control projections projecting toward the other substrate,
the liquid crystal alignment control projections include a main projection and a sub-projection that is lower than the main projection, and
the sub-projection gradually decreases in height with the increasing distance from the main projection.

2. The liquid crystal display panel according to claim 1,
wherein the sub-projection is narrower than the main projection in width.

3. The liquid crystal display panel according to claim 1 or 2,
wherein the substrate comprising the liquid crystal alignment control projections further comprises a colored layer and a light blocking layer that is higher than the colored layer, and
the sub-projection includes a first sub-projection on the colored layer and a second sub-projection on the light blocking layer.

4. The liquid crystal display panel according to claim 3,
wherein the second sub-projection is lower than the first sub-projection.

5. A method for producing a liquid crystal display panel that comprises liquid crystal alignment control projections including a main projection and a sub-projection that is lower than the main projection,
the method comprising:
patterning to form the liquid crystal alignment control projections by exposure to light through a mask comprising a light blocking part, a transmittance controlling part, and a transmitting part;
wherein the exposure is performed after setting the transmittance controlling part above a region where the sub-projection is to be formed,
the transmittance controlling part is provided with V-shaped slits which extend through the mask and are arranged in a transverse direction, and
symmetry axes of the slits decrease in length with the increasing distance from a region for forming the main projection.

6. The method for producing a liquid crystal display panel according to claim 5,
wherein the exposure is performed after setting the light blocking part above the colored layer, and setting the transmittance controlling part above the colored layer and the light blocking layer.

7. The method for producing a liquid crystal display panel according to claim 5 or 6,
wherein the transmittance controlling part comprises a first transmittance controlling part and a second transmittance controlling part, the first transmittance controlling part being provided with slits such that the total area of the slits is smaller, the second transmittance controlling part being provided with slits such that the total area of the slits is larger, and
the exposure is performed after setting the first transmittance controlling part above the colored layer, and setting the second transmittance controlling part above the light blocking layer.
